# EUROPEAN PATENT SPECIFICATION

(11) **EP 2 746 113 B1**
(45) Date of publication and mention of the grant of the patent: **02.11.2016**
(21) Application number: 12198337.3
(22) Date of filing: 20.12.2012
(51) Int. Cl.: B60R 25/021

(54) **Rotation blocking system for a key interlock device and key interlock device comprising such rotation blocking system**
Drehblockierungssystem für eine Schlüsselverriegelungsvorrichtung und Schlüsselverriegelungsvorrichtung mit einem derartigen Drehblockierungssystem
Système de blocage de rotation pour dispositif de verrouillage de clé et dispositif de verrouillage de clé comprenant ce système de blocage de rotation

(43) Date of publication of application: 25.06.2014
(73) Proprietor: U-Shin France SAS, 94046 Créteil Cedex (FR)
(72) Inventor: Della Fiorentina, Alix, 58000 NEVERS (FR); Poggi, Patrice, 58000 NEVERS (FR)
(74) Representative: Gaillarde, Frédéric F. Ch.

(56) References cited:
- EP-A2- 2 394 871
- DE-A1- 4 021 168
- US-A- 5 685 183
- US-A1- 2003 115 917

## Description

The present invention relates to a rotation blocking system for a key interlock device and a key interlock device comprising such rotation blocking system.

DE4021168 describes one type of rotation blocking system for a key interlock device.

The European patent application publication n° EP 2 394 871 A2 describes another rotation blocking system of the type comprising:
- a rotatable mobile device intended to rotate around a first axis and provided with a radial stop,
- a lever intended to rotate around a second axis in order to take a blocking position in which it is intended to stop the radial stop in order to prevent rotation of the rotatable mobile device , and a non-blocking position in which it stays away from the radial stop in order to enable rotation of the rotatable mobile device , and
- an actuator comprising a retractable part intended to move along a third axis in order to take a blocking position in which it is intended to stop the lever so as to prevent rotation of the lever from its blocking position to its non-blocking position, and a non-blocking position in which it enables the lever to be in its non-blocking position.

In this publication, the rotation blocking system further comprises a release link and a return spring intended to bring back the blocking lever from the blocking position to the non-blocking position when the rotatable mobile device rotates, so that the rotatable mobile device cannot be blocked by the blocking lever.

The retractable part is attached to the blocking lever so as to be move along the lever when the lever rotates between the blocking position and the non-blocking position. While the actuator is not energized, the retractable part is free to move along the third axis, so that it does not interfere with the rotation of the blocking lever caused by the release link and return spring.

However, when the actuator is energized, the retractable part is firmly maintained in the blocking position and prevents the blocking lever from rotating from the blocking position to the non-blocking position, so that, in turn, the blocking lever stops the radial stop in order to prevent the rotatable mobile device from rotating. In this situation, the release link and return spring always tend to bring back the blocking lever and thus exert a force on the blocking lever, which is transmitted to the retractable part and tends to make the retractable part move to its non-blocking position.

It is therefore necessary to design the actuator so that it can undergo this effort, which leads to the use of a cumbersome actuator with a relatively high electrical power consumption.

In order to overcome at least in part the previous shortcomings, it is provided a rotation blocking system of the previous type, characterized in that the third axis makes with the second axis an angle different from a right angle, the third axis being parallel to the second axis.

In the provided rotation blocking system, thanks to the orientation of the third axis with respect to the second axis, only a portion of the force applied by the lever on the retractable part is directed along the third axis, so that a less powerful actuator is needed to maintain the retractable part in its blocking position.

Optionally, the actuator comprises a solenoid intended to move the retractable part between its blocking position and non-blocking position.

Optionally, the lever is provided with a blocking end against which the radial stop is intended to apply a force directed toward the second axis.

Optionally, the rotation blocking system of the invention further comprises an escapement mechanism intended to push the lever from its blocking position toward its non-blocking position when the radial stop approaches the lever.

Optionally, the escapement mechanism comprises:
- a finger intended to rotate around an axis parallel to the second axis, the finger being provided with a beveled end on which the rotatable mobile device is intended to slide so as to make the finger rotate, and
- a spring mechanism connecting the finger to the lever and intended to push the lever along with the finger, toward the non-blocking position of the lever.

Optionally, the spring mechanism comprises a flexible strip projecting from the finger and leaning on the lever.

Optionally, the radial stop is intended to slide on the beveled end of the finger, and wherein the beveled end of the finger extends beyond the lever, so that the radial stop encounters the beveled end first.

According to another aspect, the invention relates to a key interlock device comprising a rotation blocking system according to the invention, wherein the rotatable mobile device is a camshaft intended to be rotated by a key.

An exemplary embodiment of the invention is described hereinafter, with reference to the accompanying drawings in which:
- figure 1 is a perspective view of a key interlock device according to the invention; and
- figures 2 to 4 are side views of a rotation blocking system of the key interlock device of figure 1.

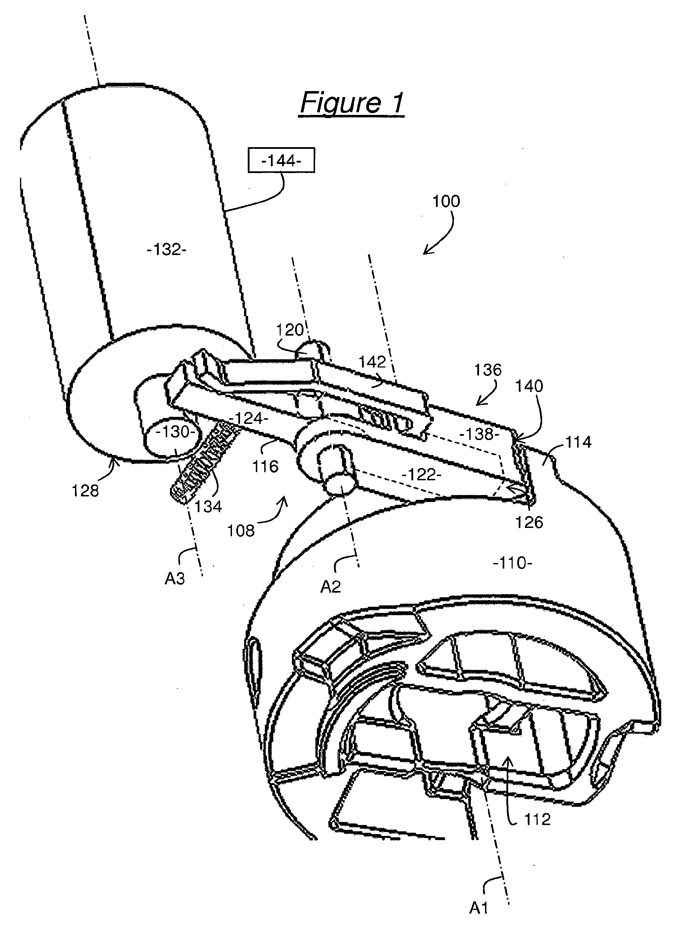

Referring to figure 1, a key interlock device 100 according to the invention will now be described. The key interlock device 100 is implemented in an automotive vehicle in order to start off the engine of the automotive vehicle.

The key interlock device comprises a housing and a barrel provided with a slot intended to receive a key. The barrel is intended to rotate around a first axis A1 with respect to the housing when the correct key is inserted, and to be blocked with respect to the housing otherwise.

The key interlock device 100 further comprises a rotation blocking system 108.

The rotation blocking system 108 comprises a camshaft 110 forming a rotatable mobile device intended to rotate around the first axis A1. The camshaft 110 is provided with a socket 112 in which the barrel is received so that they are rotationally secured to each other. In this manner, both the barrel and the camshaft 110 are intended to be rotated by the key. The camshaft 110 is further provided with a radial stop 114. The camshaft 110 is intended to transform the rotation of the key into a translation of a bolt so as to make the bolt stop or unstop a steering column.

The rotation blocking system 108 further comprises a lever 116 intended to rotate around a second axis A2. In the described example, the second axis A2 is parallel to the first axis A1. The lever 116 is intended to take a blocking position in which it is intended to stop the radial stop 114 so as to prevent further rotation of the camshaft 110. The lever 116 is also intended to take a non-blocking position in which it stays away from the radial stop 114 so as to enable rotation of the camshaft around the first axis A1. In the described example, the rotation blocking system 108 comprises a shaft 120 extending along the second axis A2 and on which the lever 116 is mounted. Furthermore, the lever 116 comprises two arms 122, 124 projecting from the second axis A2. The first arm 122 is provided with a blocking end 126 intended to stop the radial stop 114. In the described example, the two arms 122, 124 are lined up.

The rotation blocking system 108 further comprises an actuator 128 comprising a retractable part 130 intended to move along a third axis A3. The third axis A3 is parallel to the second axis A2. The retractable part 130 is intended to take a blocking position in which it is intended to stop the lever 116 so as to prevent rotation of the lever 116 from its blocking position to its non-blocking position. The retractable part 130 is also intended to take a non-blocking position in which it stays away from the lever 116 so as to enable rotation of the lever 116 from its blocking position to its non-blocking position. In particular, the retractable part 130 in its non-blocking position enables the lever 116 to be in its non-blocking position. In the described example, the retractable part 130 is detached from the lever 116, so that rotation of the lever 116 does not cause movement of the retractable part 130, preventing early wearing out. Furthermore, the retractable part 130 is intended to stop the second arm 124 of the lever 116. In the described example, the actuator 128 comprises a solenoid 132 intended to move the retractable part 130 between its blocking position and non-blocking position.

The rotation blocking system 108 further comprises a return mechanism intended to bring back the lever 116 towards its blocking position. In the described example, the return mechanism is a return spring 134 connecting the second arm 124 of the lever 116 to the housing.

The rotation blocking system 108 further comprises an escapement mechanism 136 intended to push the lever 116 from its blocking position toward its non-blocking position when the radial stop 114 approaches the lever 116, and in particular its blocking end 126.

In the described example, the escapement mechanism 136 comprises a finger 138 intended to rotate around the second axis. In the described example, the finger 138 covers the first arm 122 of the lever 116. The finger 138 is provided with a beveled end 140 intended to slide on the camshaft 110 so as to make the finger 138 rotate. In the described example, the beveled end 140 of the finger 138 extends beyond the blocking end 126 of the lever 116, so that the radial stop 114 encounters the beveled end 140 first. The beveled end 140 enables the radial stop 114 to push back the finger 138.

The escapement mechanism 136 further comprises a spring mechanism connecting the finger 138 to the lever 116 and intended to push the lever 116 along with the finger 138, toward the non-blocking position of the lever 116. In the described example, the spring mechanism is a flexible strip 142 projecting from the finger 138 and leaning on the second arm 124 of the lever 116.

The key interlock device 100 further comprises a controlling device 144 intended to make the actuator 128 move the retractable part 130 from its non-blocking position to its blocking position upon detection that a gear lever (not represented) of the automotive vehicle is in a parking position, and from its blocking position to its non-blocking position upon detection that the gear lever of the automotive vehicle is in another position.

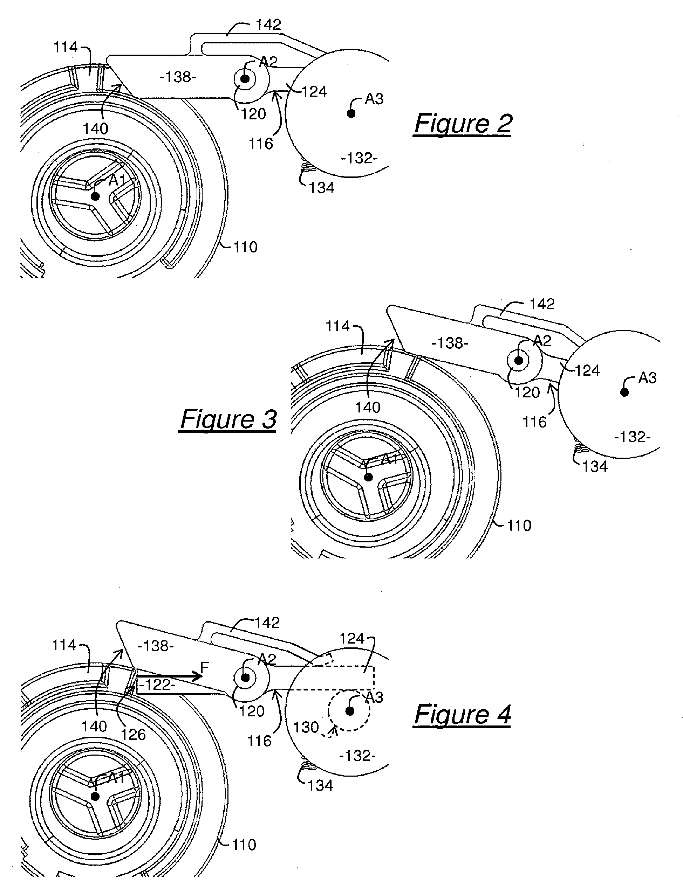

Referring to figures 2 to 4, operation of the key interlock device 100 will now be explained.

Referring to figure 2, the key is an ACC position in which the radial stop 114 is at a distance from the lever 116 and the escapement mechanism 138, 142. The ACC position corresponds to the position in which radio and accessory items of the vehicle are powered on. The return spring 134 maintains the lever 116 in its blocking position, i.e. with its blocking end 126 on the circular course that would be followed by the radial stop 114 if the key was rotated to a STOP position. The STOP position corresponds to the position in which the key can be inserted and removed.

Referring to figure 3, the controlling device 144 detects that the gear lever is in the parking position and makes the actuator 128 move the retractable part 130 to its non-blocking position. The key is rotated towards the STOP position, which causes the radial stop 114 to rotate toward the blocking end 126 of the lever 116. However, the radial stop 114 reaches first the beveled end 140 of the finger 138 and, thanks to the bevel, pushes the finger 138 away. In turn, thanks to the flexible strip 142, the finger 138 takes the lever 116 along until the lever 116 reaches its non-blocking position. The radial stop 114 is then not blocked anymore by the lever 116, so that the key is able to reach the STOP position.

Referring to figure 4, the controlling device 144 detects that the gear lever is in another position than the parking position and makes the actuator 128 move the retractable part 130 to its blocking position. The key is rotated towards the STOP position, which causes the radial stop 114 to rotate toward the blocking end 126 of the lever 116. Again, the radial .stop 114 reaches first the beveled end 140 of the finger 138 and, thanks to the bevel, pushes the finger 138 away. However, this time, the lever 116 is blocked by the retractable part 130 so that it cannot leave its blocking position. The finger 138 is pushed away alone, without the lever, and unveil the blocking end 126 of the lever 116. The radial stop 114 is then blocked by this blocking end 126, so as to prevent the key to reach the STOP position. The blocked radial stop 114 applies a force F on the blocking end 126 directed toward the second axis A2 or in a direction passing within about 1 to 2 mm of the second axis A2, preferably on the side of the second axis opposite the rotation of the finger 138. In this manner, the shaft 120 bears most of the force applied by the key. On the other hand, the flexible strip 142 applies a force f to the second arm 124 of the lever 116, which transmits this force f to the retractable part 130. However, thanks to the orientation of the third axis 3 with respect to the second axis A2, this force f has no component along the third axis A3, so that the actuator 128 does not need to compensate the force f. In fact, the force f can be mechanically compensated e.g. by bearings of the retractable part 130. Furthermore, the actuator does not need to be energized once the retractable part 130 is in its blocking position. A small actuator 128 can therefore be used, which reduces the bulk of the rotation blocking system 108, as well as the electrical consumption of the actuator 128.

It should be noted than the invention is not limited by the previous description, but defined by the appended claims, which should be construed as covering all modifications and alternative constructions that may occur to the one skilled in the art which fairly fall within the basic teaching set forth herein.

Furthermore, the finger could rotate around another axis than the second axis, this other axis being parallel to the second axis.

## Claims

1. Rotation blocking system (108) for a key interlock device (100) comprising:
- a rotatable mobile device (110) intended to rotate around a first axis (A1) and provided with a radial stop (114),
- a lever (116) intended to rotate around a second axis (A2) in order to take a blocking position in which it is intended to stop the radial stop (114) in order to prevent rotation of the rotatable mobile device (110), and a non-blocking position in which it stays away from the radial stop (114) in order to enable rotation of the rotatable mobile device (110), and
- an actuator (128) comprising a retractable part (130) intended to move along a third axis (A3) in order to take a blocking position in which it is intended to stop the lever (116) so as to prevent rotation of the lever (116) from its blocking position to its non-blocking position, and a non-blocking position in which it enables the lever (116) to be in its non-blocking position, **characterized in that** the third axis (A3) is parallel to the second axis (A2).

2. Rotation blocking system (108) according to claim 1, wherein the actuator (128) comprises a solenoid (132) intended to move the retractable part (130) between its blocking position and non-blocking position.

3. Rotation blocking system (108) according to claim 1 or 2, wherein the lever (116) is provided with a blocking end (126) against which the radial stop (114) is intended to apply a force directed toward the second axis (A2).

4. Rotation blocking system (108) according to any one of claims 1 to 3, further comprising a escapement mechanism (138, 142) intended to push the lever (116) from its blocking position toward its non-blocking position when the radial stop (114) approaches the lever (116).

5. Rotation blocking system (108) according to claim 4, wherein the escapement mechanism (138, 142) comprises:
- a finger (138) intended to rotate around an axis parallel to the second axis (A2), the finger (138) being provided with a beveled end (140) on which the rotatable mobile device (110) is intended to slide so as to make the finger (138) rotate, and
- a spring mechanism (142) connecting the finger (138) to the lever (116) and intended to push the lever (116) along with the finger (138), toward the non-blocking position of the lever (116).

6. Rotation blocking system (108) according to claim 5, wherein the spring mechanism (142) comprises a flexible strip projecting from the finger and leaning on the lever (116).

7. Rotation blocking system (108) according to claim 5 or 6, wherein the radial stop (114) is intended to slide on the beveled end (140) of the finger (138), and wherein the beveled end (140) of the finger (138) extends beyond the lever (116), so that the radial stop (114) encounters the beveled end (140) first.

8. Key interlock device (100) comprising a rotation blocking system according to any one of claims 1 to 7, wherein the rotatable mobile device (110) is a camshaft intended to be rotated by a key.

## Patentansprüche

1. Drehblockierungssystem (108) für eine Schlüsselverriegelungsvorrichtung (100), umfassend:
- eine drehbare mobile Vorrichtung (110) zum Drehen um eine erste Achse (A1), die mit einem radialen Anschlag (114) bereitgestellt ist,
- einen Hebel (116) zum Drehen um eine zweite Achse (A2), um eine Blockierposition zum Stoppen des radialen Anschlags (114) zum Verhindern des Drehens der drehbaren mobilen Vorrichtung (110) und eine Nichtblockierposition zum Wegbleiben von dem radialen Anschlag (114) zum Ermöglichen der Drehung der drehbaren mobilen Vorrichtung (110) einzunehmen, und
- ein Betätigungselement (128), das ein einfahrbares Teil (130) zum Bewegen entlang einer dritten Achse (A3) aufweist, um eine Blockierposition zum Stoppen des Hebels (116) zum Verhindern der Drehung des Hebels (116) aus seiner Blockierposition zu seiner Nichtblockierposition und eine Nichtblockierposition zum Ermöglichen, dass sich der Hebel (116) in seiner Nichtblockierposition befindet, einzunehmen, **dadurch gekennzeichnet, dass** die dritte Achse (A3) parallel zur zweiten Achse (A2) ist.

2. Drehblockierungssystem (108) nach Anspruch 1, wobei das Betätigungselement (128) ein Solenoid (132) zum Bewegen des einfahrbaren Teils (130) zwischen seiner Blockierposition und Nichtblockierposition aufweist.

3. Drehblockierungssystem (108) nach Anspruch 1 oder 2, wobei der Hebel (116) mit einem blockierenden Ende (126) zum Anlegen einer Kraft an den radialen Anschlag (114), die zur zweiten Achse (A2) gerichtet ist, bereitgestellt ist.

4. Drehblockierungssystem (108) nach einem der Ansprüche 1 bis 3, ferner umfassend einen Hemmungsmechanismus (138, 142) zum Drücken des Hebels (116) aus seiner Blockierposition zu seiner Nichtblockierposition, wenn sich der radiale Anschlag (114) dem Hebel (116) nähert.

5. Drehblockierungssystem (108) nach Anspruch 4, wobei der Hemmungsmechanismus (138, 142) umfasst:
- einen Finger (138) zum Drehen um eine Achse, die parallel zur zweiten Achse (A2) ist, wobei der Finger (138) mit einem abgeschrägten Ende (140) bereitgestellt ist, an dem die drehbare mobile Vorrichtung (110) entlang gleiten soll, um das Drehen des Fingers (138) zu bewirken, und
- einen Federmechanismus (142), der den Finger (138) mit dem Hebel (116) verbindet und den Hebel (116) zusammen mit dem Finger (138) zur Nichtblockierposition des Hebels (116) drücken soll.

6. Drehblockierungssystem (108) nach Anspruch 5, wobei der Federmechanismus (142) einen flexiblen Streifen umfasst, der vom Finger vorsteht und an dem Hebel (116) anliegt.

7. Drehblockierungssystem (108) nach Anspruch 5 oder 6, wobei der radiale Anschlag (114) am abgeschrägten Ende (140) des Fingers (138) entlang gleiten soll und wobei sich das abgeschrägte Ende (140) des Fingers (138) über den Hebel (116) hinaus erstreckt, sodass der radiale Anschlag (114) zunächst auf das abgeschrägte Ende (140) stößt.

8. Schlüsselverriegelungsvorrichtung (100), umfassend ein Drehblockierungssystem nach einem der Ansprüche 1 bis 7, wobei die drehbare mobile Vorrichtung (110) eine Nockenwelle zum Drehen durch einen Schlüssel ist.

## Revendications

1. Système de blocage de rotation (108) pour un dispositif de verrouillage de clé (100), comprenant :
- un dispositif rotatif mobile (110) destiné à tourner autour d'un premier axe (A1) et muni d'une butée radiale (114),
- un levier (116) destiné à tourner autour d'un deuxième axe (A2) afin de prendre une position de blocage dans laquelle il est destiné à arrêter la butée radiale (114) afin d'empêcher la rotation du dispositif mobile rotatif (110), et une position de non-blocage dans laquelle il reste à l'écart de la butée radiale (114) afin de permettre la rotation du dispositif mobile rotatif (110), et
- un actionneur (128) comprenant une partie rétractable (130) destiné à se déplacer le long d'un troisième axe (A3) afin de prendre une position de blocage dans laquelle il est destiné à arrêter le levier (116) de manière à empêcher la rotation du levier (116) de sa position de blocage à sa position de non-blocage, et une position de non-blocage dans laquelle il permet au levier (116) d'être dans sa position de non blocage, **caractérisé en ce que** le troisième axe (A3) est parallèle au deuxième axe (A2).

2. Système de blocage de rotation (108) selon la revendication 1, dans lequel l'actionneur (128) comprend un solénoïde (132) destiné à déplacer la partie rétractable (130) entre sa position de blocage et une position de non-blocage.

3. Système de blocage de rotation (108) selon la revendication 1 ou 2, dans lequel le levier (116) est muni d'une extrémité de blocage (126) contre laquelle la butée radiale (114) est destinée à appliquer une force dirigée vers le deuxième axe (A2).

4. Système de blocage de rotation (108) selon l'une quelconque des revendications 1 à 3, comprenant en outre un mécanisme d'échappement (138, 142) destiné à pousser le levier (116) de sa position de blocage vers sa position de non-blocage lorsque la butée radiale (114) s'approche du levier (116).

5. Système de blocage de rotation (108) selon la revendication 4, dans lequel le mécanisme d'échappement (138, 142) comprend :
- un doigt (138) destiné à tourner autour d'un axe parallèle au deuxième axe (A2), le doigt (138) étant muni d'une extrémité biseautée (140) sur laquelle le dispositif mobile rotatif (110) est destiné à coulisser de manière à faire tourner le doigt (138), et
- un mécanisme de ressort (142) reliant le doigt (138) au levier (116) et destiné à pousser le levier (116) ainsi que le doigt (138), vers la position de non-blocage du levier (116).

6. Système de blocage de rotation (108) selon la revendication 5, dans lequel le mécanisme de ressort (142) comprend une bande flexible faisant saillie à partir du doigt et appuyée sur le levier (116).

7. Système de blocage de rotation (108) selon la revendication 5 ou 6, dans lequel la butée radiale (114) est destinée à coulisser sur l'extrémité biseautée (140) du doigt (138), et dans lequel l'extrémité biseautée (140) du doigt (138) s'étend au-delà du levier (116), de sorte que la butée radiale (114) rencontre l'extrémité biseautée (140) en premier.

8. Dispositif de verrouillage de clé (100) comprenant un système de blocage de rotation selon l'une quelconque des revendications 1 à 7, dans lequel le dispositif mobile rotatif (110) est un arbre à cames destiné à être tourné par une clé.
